# EUROPÄISCHE PATENTSCHRIFT

(11) **EP 3 180 984 B1**
(45) Veröffentlichungstag und Bekanntmachung des Hinweises auf die Patenterteilung: **03.04.2019**
(21) Anmeldenummer: 16193563.0
(22) Anmeldetag: 12.10.2016
(51) Int. Cl.: A21B 3/04, F24C 15/00, F24C 15/32

(54) **GARGERÄT**
COOKING DEVICE
APPAREIL DE CUISSON

(30) Priorität: 18.12.2015 DE 102015225885
(43) Veröffentlichungstag der Anmeldung: 21.06.2017
(73) Patentinhaber: BSH Hausgeräte GmbH, 81739 München (DE)
(72) Erfinder: Geipel, Philipp, 81739 München (DE); Grobleben, Ralf, 75015 Bretten (DE)

(56) Entgegenhaltungen:
- EP-A1- 2 375 169
- EP-A1- 2 517 563
- FR-A1- 2 958 725

## Beschreibung

### Hintergrund der Erfindung

Die vorliegende Erfindung betrifft ein Gargerät, insbesondere Dampfgargerät, mit einem durch eine Tür verschließbaren Garraum, einer Bedienblende und einem außerhalb des Garraums angeordneten Wassertank, der mit einer in der Blende angeordneten Einfüllvorrichtung fluidisch gekoppelt ist.

### Stand der Technik

Aus dem Stand der Technik sind Gargeräte wie beispielsweise Backöfen, Mikrowellengeräte, Dampfgargeräte usw. bekannt. Dabei können Dampfgargeräte zum Beispiel in Dampfgarer, Dampfbacköfen, Dampfkochmulden und Backöfen mit einer Dampffunktion unterteilt werden.

Gargeräte, insbesondere Backöfen, können zur Verbesserung des Garergebnisses mit einer zusätzlichen Dampfunktion ausgestattet oder direkt als Dampfgarer ausgeführt werden. Dabei können die auf dem Markt verfügbaren Systeme durch Erhitzen von Wasser Dampf erzeugen, der dann anschließend in eine Muffel des Gargeräts eingetragen wird. Durch die Zuführung von Dampf kann beispielsweise die Austrocknung verhindert oder die Bräunung eines Garguts verbessert werden.

Eine weitere Möglichkeit zum Eintragen von Feuchtigkeit/Flüssigkeit in einen Garraum stellt ein Gargerät mit einer zusätzlichen Aerosol-Funktion dar. Mithilfe dieser Funktion kann Aerosol in Form eines feinen Aerosolnebels erzeugt werden, der dann in einen Garraum des Gargeräts bereitstellbar ist. Die Vorrichtung zum Erzeugen und Eintragen von Aerosol ist derart eingerichtet, dass eine Flüssigkeit in kleinste Tröpfchen zerstäubt werden kann. Die Tröpfchen sind in der Lage, zusätzliche Stoffe zu transportieren, ohne dass diese zerstört werden. Im Gegensatz zu einem Dampfgargerät oder einem Backofen mit Dampffunktion braucht die Flüssigkeit nicht erwärmt werden.

Zum Betrieb der zuvor genannten Geräte ist es erforderlich, einen Behälter für eine Betriebsflüssigkeit, beispielsweise Wasser vorzusehen. Bei einigen Ausführungen kann vorgesehen sein, dass ein Wassertank, in dem das Wasser, welches dann verdampft/vernebelt werden soll, reversibel entnommen und wieder eingesetzt werden kann. Dabei sind auch Systeme bekannt, bei denen der Wassertank frontseitig des Dampfgargeräts herausgezogen und wieder eingeschoben werden kann.

Bei den gegenwärtig bekannten Ausgestaltungen mit einschiebbarem und entnehmbarem Wassertank kann es aufgrund der Ausgestaltungen für einen Nutzer relativ aufwendig sein, den Entnahmevorgang und insbesondere den Einführvorgang durchzuführen. Dabei können sich Verspreizungen oder Verklemmungen ergeben. Dadurch kann auch ein Überschwappen des Wassers in dem Tank erfolgen, so dass auch diesbezüglich ein Herauslaufen und Verunreinigung der Umgebung auftreten kann. Darüber hinaus ist bei bekannten Systemen nach dem Herausziehen ein Austropfen aus dem Andockstutzen des Wassertanks auf den Boden oder eine Gerätevorderseite vorkommend.

Ein Gargerät mit einem entnehmbaren Tank ist beispielsweise aus der EP 2 363 057 A1 bekannt, das einen mit einer Tür verschließbaren Garraum, eine Bedienblende und einen darin schubladenartig gehalterten Vorratsbehälter für eine Betriebsflüssigkeit aufweist.

Die EP 2 375 169 A1 und FR2958725 zeigen einen Backofen mit einem in einem Gehäuse untergebrachten Garraum, einem Dampferzeuger zum Erzeugen von in den Garraum einzuführenden Dampf, einem Wasserfüllschieber, welcher einen Wasserbehälter über einen Hydraulikkreislauf mit Wasser versorgt, wobei der Wasserfüllschieber teilweise aus dem Backofen ausziehbar ist, wobei der Wasserbehälter, welcher den Dampferzeuger über den Hydraulikkreislauf mit Wasser versorgt, an der Struktur des Backofens angebracht ist. Der Wasserfüllschieber ist über eine Wasserzirkulationsleitung hydraulisch mit dem Wasserbehälter verbunden. Der Wasserbehälter umfasst eine Führungsvorrichtung der Wasserzirkulationsleitung, welche den Wasserfüllschieber hydraulisch mit dem Wasserbehälter verbindet, wobei die Führungsvorrichtung die Wasserzirkulationsleitung während der Bewegung des Wasserfüllschiebers zwischen einer eingeschobenen Position und einer ausgezogenen Position, und umgekehrt, im Verhältnis zu einer Außenseite des Backofens und im Verhältnis zu dem Wasserbehälter in das Innere eines in dem Wasserbehälter eingerichteten Kanals führt.

Darüber hinaus kann bei anderen bekannten Ausgestaltungen vorgesehen sein, dass ein Wassertank fest in dem Gerät integriert und nicht entnehmbar ist. Derartige Geräte benötigen somit eine Einfüllvorrichtung, die mit dem Wassertank fluidisch gekoppelt ist. Im Gegensatz zu den Geräten mit entnehmbaren Wassertank ist es bei dieser Art von Geräten nicht möglich, das Wasser aus dem fest integrierten Tank zu entleeren. Insbesondere sind die im Stand der Technik offenbarten Einfüllmechanismen lediglich dazu in der Lage, um Wasser während des Einfüllvorganges an den Wassertank zu leiten.

Die Beschreibung des Standes der Technik ist vorgesehen, um das Verständnis des Hintergrundes der vorliegenden Erfindung zu fördern, und kann Gegenstände und Informationen außerhalb des Standes der Technik umfassen, der einem Durchschnittsfachmann bekannt ist.

### Der Erfindung zugrundeliegende Aufgabe

Es ist eine Aufgabe der vorliegenden Erfindung, ein gegenüber dem Stand der Technik verbessertes Gargerät bereitzustellen, das die oben beschriebenen Nachteile beseitigt, während die aus dem Stand der Technik erzielten Vorteile beibehalten werden.

### Erfindungsgemäße Lösung

Die Lösung der gestellten Aufgabe gelingt durch ein Gargerät mit den Merkmalen des Anspruchs 1. Erfindungsgemäß ist dabei vorgesehen ein Gargerät, insbesondere Dampfgargerät, mit einem durch eine Tür verschließbaren Garraum, einer Bedienblende und einem außerhalb des Garraums angeordneten Wassertank, der mit einer in der Blende angeordneten Einfüllvorrichtung fluidisch gekoppelt ist, wobei die Einfüllvorrichtung ein Verschlusselement aufweist, welches durch eine schwenkbare Klappe gebildet ist, das in eine erste Öffnungsstellung zum Einfüllen von Wasser und eine zweite Öffnungsstellung zum Entleeren von Wasser aus dem Wassertank bringbar ist, wobei zum Entleeren des Wassertanks eine Pumpe vorgesehen ist. Die Pumpe ist nur in der zweiten Öffnungsstellung, die von der ersten Öffnungsstellung verschieden ist, einschaltbar.

Es ist somit nicht erforderlich, dass der Wassertank in unmittelbarer Nähe zu der Blende angeordnet werden muss. Darüber hinaus lässt sich das Verschlusselement der Einfüllvorrichtung in vorteilhafter Weise in die Blende integrieren. Ein maßgeblicher Vorteil ist ferner, dass in bzw. hinter der Blende kein aufwändiger Schiebe- und/oder Kopplungsmechanismus mit wasserführenden Teilen vorgesehen sein muss. Dies kann zu einer verminderten Komplexität und somit zu einer Kostenersparnis führen.

Bei dem erfindungsgemäßen Gargerät kann es sich um jede Art von Gargerät handeln, das einen in dem Gerät befindlichen Behälter zum Bevorraten einer Betriebsflüssigkeit, beispielsweise Wasser aufweist. Zum Beispiel ist das Gargerät in nicht einschränkender Weise ein Dampfgargerät, ein Gargerät mit Dampffunktion, ein Aerosol-Gargerät oder dergleichen. Der Wassertank kann an jeder geeigneten Einbauposition innerhalb eines Gehäuses des Gargeräts angeordnet sein. Die fluidische Kopplung zwischen der Einfüllvorrichtung und dem Wassertank kann in nicht einschränkender Weise Rohrleitungen, Ventile, Pumpen und/oder dergleichen aufweisen oder dadurch gebildet sein. Es ist selbstverständlich, dass weitere Vorrichtungen vorgesehen sind, um beispielsweise das Wasser im Falle eines Dampfgargeräts von dem Wassertank an eine Verdampfereinheit zuzuführen. Diese Art von Vorrichtungen ist dem Durchschnittsfachmann jedoch bestens bekannt, so dass eine ausführliche Beschreibung hiervon aus Gründen der Klarheit weggelassen wird.

Die Einfüllvorrichtung kann ferner eine Halterung zum Koppeln derselben mit dem Verschlusselement umfassen. Darüber hinaus können noch weitere Elemente, wie beispielsweise Befestigungsmittel zum Befestigen der Einfüllvorrichtung an oder in der Blende umfasst sein. Die Blende kann eine an das Verschlusselement angepasste Aussparung zur Aufnahme desselben aufweisen. Es kann vorgesehen sein, dass das Verschlusselement der Einfüllvorrichtung im Gegensatz zu einem Gargerät mit entnehmbaren Wassertank nicht ohne Montageaufwand von der Einfüllvorrichtung lösbar ist. Weiterhin kann vorgesehen sein, dass das Verschlusselement beim Erreichen der beiden Öffnungsstellungen jeweils in der Einfüllvorrichtung verrastet, so dass beispielsweise für einen Benutzer/Anwender klar erkennbar ist, dass er eine bestimmte Öffnungsstellung erreicht hat. Das heißt, dass jeder der beiden Öffnungsstellungen eine definierte Raststufe zugeordnet ist, in der das Verschlusselement relativ zu der Einfüllvorrichtung verrastbar gehalten ist.

Die zweite Öffnungsstellung, die von der ersten Öffnungsstellung verschieden ist, wird nur nach Durchlaufen der ersten Öffnungsstellung erreicht. Das heißt, beim Bringen des Verschlusselements in die zweite Öffnungsstellung wird das Verschlusselement in Bezug auf eine Öffnungsrichtung desselben zuerst in die erste Öffnungsstellung gebracht und erreicht dann nach Durchlaufen der ersten Öffnungsstellung die zweite Öffnungsstellung. Infolgedessen hat das Verschlusselement beim Erreichen der zweiten Öffnungsstellung einen größeren Verfahrweg als nach Erreichen der ersten Öffnungsstellung in der gleichen Bewegungsrichtung zurückgelegt.

Im konkreten Anwendungsfall kann ein Benutzer das Verschlusselement der Einfüllvorrichtung beispielsweise aus einer Schließstellung, in der sich das Verschlusselement in einem nicht betätigten Zustand befindet, zuerst in die erste Öffnungsstellung bringen, um beispielsweise Wasser in die Einfüllvorrichtung zuzuführen. Bei einem Betrieb des Gargeräts kann jetzt das Verschlusselement in seine Schließstellung zurück gebracht werden. Soll jedoch das restliche Wasser, beispielsweise nach Betriebsende, aus dem Wassertank entleert werden, dann bringt der Benutzer das Verschlusselement dadurch in die zweite Öffnungsstellung, indem er eine Öffnungsbewegung vollführt, in der das Verschlusselement zuerst die erste Öffnungsstellung durchläuft und dann -nach Durchlaufen der ersten Öffnungsstellung in gleicher Richtung- die zweite Öffnungsstellung zum Entleeren des Wassers aus dem Wassertank erreicht.

Dadurch kann für den Benutzer in vorteilhafter Weise eine optimale und einfache Bedienung der beiden Vorgänge, nämlich das Befüllen und Entleeren, erreicht werden.

Vorteilhafte Aus- und Weiterbildungen, die einzeln oder in Kombination miteinander eingesetzt werden können, sind Gegenstand der abhängigen Ansprüche.

Gemäß einer Ausführungsform der vorliegenden Erfindung ist vorgesehen, dass das Verschlusselement eine als Frontteil gebildete Außenwand aufweist, die in einer Schließstellung im Wesentlichen flächenbündig mit der Blende ist. Dadurch kann in vorteilhafter Weise ein optisch ansprechendes Erscheinungsbild des Gargeräts erreicht werden.

Gemäß einer weiteren Ausführungsform der vorliegenden Erfindung ist vorgesehen, dass das Verschlusselement durch eine Push-Pull-Funktion aus seiner Schließstellung in eine der Öffnungsstellungen bringbar ist. Die Push-Pull-Funktion stellt eine Möglichkeit zum Bringen des Verschlusselements in eine Öffnungsstellung dar, aber die vorliegende Erfindung ist darauf nicht beschränkt. Durch die Push-Pull-Funktion kann auf einen Griff, eine Griffleiste oder ein ähnliches Mittel zum Bewegen des Verschlusselements aus seiner Schließstellung verzichtet werden, wodurch es beispielsweise zu keiner Störung des Designs der Blende kommt. Im Zusammenhang mit einem Bewegen des Verschlusselements wäre auch denkbar, dasselbe zumindest teilweise motorisch aus der Schließstellung in eine der beiden Öffnungsstellungen zu verfahren.

Gemäß noch einer weiteren Ausführungsform der vorliegenden Erfindung weist das Verschlusselement einen Aufnahmeraum auf, an dessen Unterseite ein Anschlussteil zur Verbindung mit dem Wassertank angeordnet ist. Durch die Anordnung des Anschlussteils an der Unterseite oder an einer Bodenfläche des in dem Verschlusselement gebildeten Aufnahmeraums kann beispielsweise das Wasser beim Befüllvorgang vollständig in den Wassertank gelangen, ohne dass Wasser in dem Aufnahmeraum verbleibt. Es versteht sich für den Durchschnittsfachmann, dass der Aufnahmeraum auch direkt durch das Verschlusselement gebildet sein kann, so dass der Aufnahmeraum im Wesentlichen dem Innenraum des Verschlusselements entspricht.

Erfindungsgemäß ist zum Entleeren des Wassertanks eine Pumpe vorgesehen. Mittels der Pumpe kann auf einfache Art und Weise das Wasser aus dem Wassertank zu dem Verschlusselement zurückgeführt werden. Die Pumpe ist nur in der zweiten Öffnungsstellung einschaltbar. Somit kann in vorteilhafter Weise sichergestellt werden, dass sich das Verschlusselement in der dafür vorgesehenen zweiten Öffnungsstellung, also einer Stellung zum Entleeren des Wassers aus dem Wassertank, befindet. Dadurch kann eine Fehlbedienung durch einen Benutzer vermieden werden. Es kann ferner bevorzugt sein, dass die Pumpe bei Erreichen der zweiten Öffnungsstellung automatisch eingeschaltet wird. Somit ließe sich beispielsweise der Benutzerkomfort für einen Anwender weiter erhöhen und es müssten keine zusätzlichen an der Blende angeordnete Schalter zum Einschalten der Pumpe vorgesehen werden. Es versteht sich für den Durchschnittsfachmann, dass für das automatische Einschalten geeignete Komponenten, wie beispielsweise ein Positionssensor, Relais und/oder dergleichen vorgesehen werden.

Gemäß der vorliegenden Erfindung ist das Verschlusselement durch eine schwenkbare Klappe gebildet. Dadurch wird eine robuste und stabile Ausführung des Verschlusselements realisiert. Ferner kann diese Ausführung ermöglichen, dass das eingefüllte Wasser im Wesentlichen vollständig in den Wassertank ablaufen kann. Die Klappe kann weiterhin sicher an der Einfüllvorrichtung befestigt werden, wodurch sich auch die Haptik beim Bedienen derselben verbessert. Es kann bevorzugt vorgesehen sein, dass die schwenkbare Klappe um eine horizontale Schwenkachse schwenkbar ist. Die horizontale Schwenkachse liegt bevorzugt in Bautiefenrichtung hinter der Blende, so dass sich die Klappe in vorteilhafter Weise vollständig in der Blende integrieren lässt.

Gemäß einer weiteren Ausführungsform der vorliegenden Erfindung ist vorgesehen, dass die als Frontteil gebildete Außenwand in Bezug auf eine durch die Blende gebildete Ebene in der ersten Öffnungsstellung in einem Bereich von 30° bis 60°, insbesondere 40° bis 50° geneigt ist und in der zweiten Öffnungsstellung in einem Bereich von 100° bis 130°, insbesondere 110° bis 120° geneigt ist. Dadurch können einerseits eine sichere und benutzerfreundliche Befüllung und andererseits ein problemlose Entleerung des Wassertanks erreicht werden.

### Kurzbeschreibung der Zeichnungen

Die obigen und weiteren Merkmale der vorliegenden Erfindung werden nun mit Bezug auf ein bestimmtes Ausführungsbeispiele ausführlich beschrieben, welches durch die beigefügten Zeichnungen dargestellt ist, und welches im Folgenden nur zur Veranschaulichung dient, und somit nicht für die vorliegende Erfindung einschränkend ist. In der Zeichnung zeigen:
- Fig. 1: eine perspektivische Ansicht eines Gargeräts mit einer Einfüllvorrichtung 10 gemäß einem Ausführungsbeispiel der vorliegenden Erfindung.
- Fig. 2: eine perspektivische Ansicht, die die Einfüllvorrichtung 10 von Fig. 1 gemäß dem Ausführungsbeispiel der vorliegenden Erfindung schematisch in einer ersten Öffnungsstellung B darstellt.
- Fig. 3: eine schematische Schnittdarstellung der Einfüllvorrichtung 10 von Fig. 2 entlang der Linie III-III.
- Fig. 4: eine perspektivische Ansicht, die die Einfüllvorrichtung 10 von Fig. 1 gemäß dem Ausführungsbeispiel der vorliegenden Erfindung schematisch in einer zweiten Öffnungsstellung E darstellt.
- Fig. 5: eine schematische Schnittdarstellung der Einfüllvorrichtung 10 von Fig. 4 entlang der Linie V-V.

Es ist zu beachten, dass die beigefügten Zeichnungen nicht notwendigerweise maßstabgerecht sind und eine etwas vereinfachte Darstellung von verschiedenen bevorzugten Merkmalen darstellen, die der Veranschaulichung der Grundsätze der Erfindung dienen. Die spezifischen Konstruktionsmerkmale der vorliegenden Erfindung, wie sie hierin offenbart sind, einschließlich z.B. spezifischer Abmessungen, Orientierungen, Einbauorte und Formen werden zum Teil durch die eigens dafür vorgesehene Anmeldung und die Arbeitsumgebung bestimmt. Insbesondere können Materialstärken und dergleichen zur Verdeutlichung übertrieben dargestellt sein.

In den Figuren werden gleiche oder funktionsgleiche Elemente mit den gleichen Bezugszeichen versehen.

### Ausführliche Beschreibung der Figuren

Ein Ausführungsbeispiel der vorliegenden Erfindung wird im Folgenden unter Bezugnahme auf die beigefügten Zeichnungen ausführlich beschrieben.

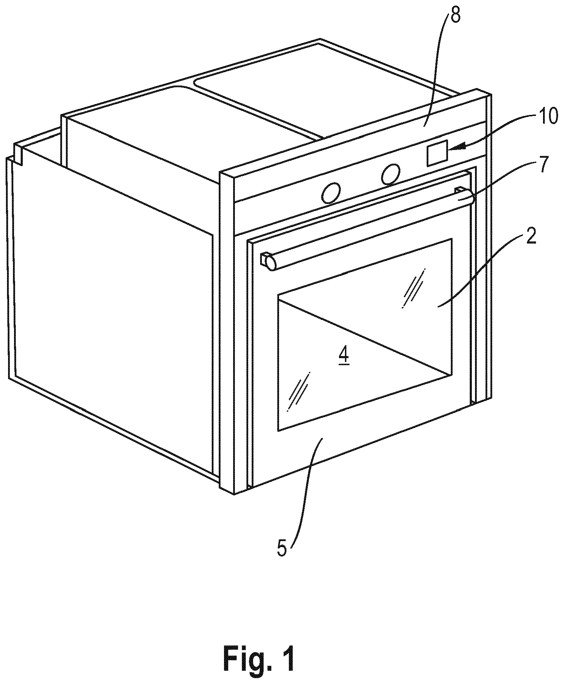

In Fig. 1 ist in einer vereinfachten schematischen Darstellung ein erfindungsgemäßes Gargerät gezeigt, welches einen Garraum 4 aufweist. Der Garraum 4 ist durch eine Muffel 2 begrenzt, wobei frontseitig eine Beschickungsöffnung ausgebildet ist, die durch eine Tür 5 verschließbar ist. Die Tür 5 weist an ihrer Außenseite einen Griff 7 auf. In dem Garraum 4 kann Gargut eingebracht und zubereitet werden. Das Gargerät weist eine an einem oberen Bereich des Gargeräts angeordnete Blende 8 auf. In der Blende 8 befinden sich Bedienelemente in Form von drehbaren Bedienknebeln.

In Blickrichtung auf das Gargerät (Bautiefenrichtung) ist in einem Seitenbereich der Blende 8 eine Einfüllvorrichtung 10 angeordnet, die mit einem Wassertank (nicht gezeigt) fluidisch gekoppelt ist. In die Einfüllvorrichtung 10 wird eine Betriebsflüssigkeit, beispielsweise Wasser eingefüllt. Die Einfüllvorrichtung 10 weist ein Verschlusselement 12 auf. Das Verschlusselement 12 umfasst eine als Frontteil gebildete Außenwand 14, die in der gezeigten Schließstellung S im Wesentlichen flächenbündig mit der Blende 8 ist. Das Verschlusselement 12 kann durch eine Push-Pull-Funktion aus seiner Schließstellung S in eine Öffnungsstellung B oder E gebracht werden.

Weiterhin ist in dem Gargerät eine Pumpe (nicht gezeigt) vorgesehen, die bei Erreichen einer zweiten Öffnungsstellung automatisch eingeschaltet wird, um das Wasser aus dem Wassertank zu entleeren.

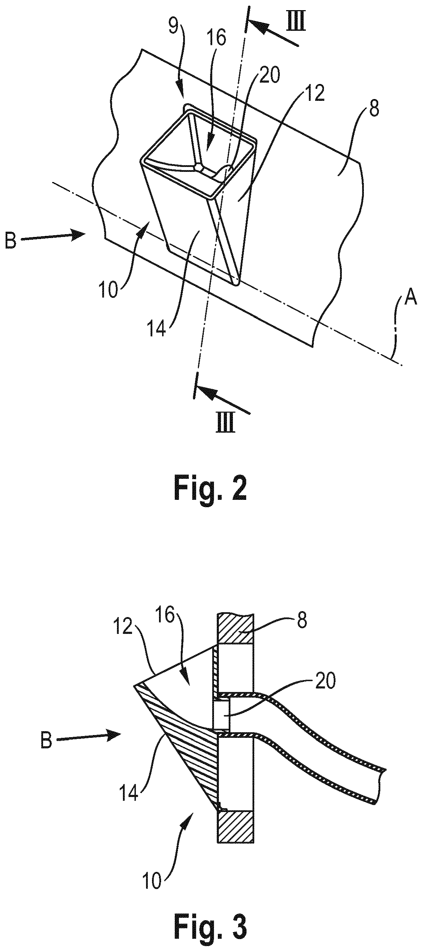

Fig. 2 zeigt eine perspektivische Ansicht, die die Einfüllvorrichtung 10 von Fig. 1 in einer ersten Öffnungsstellung B darstellt. In der ersten Öffnungsstellung B kann Wasser zum Zuführen an den Wassertank eingefüllt werden. Wie aus Fig. 2 ersichtlich ist, ist das Verschlusselement 12 der Einfüllvorrichtung 10 durch eine im Wesentlichen taschenförmige Klappe gebildet, die um eine Schwenkachse A schwenkbar ist. Die Schwenkachse A ist in Bautiefenrichtung des Gargeräts hinter der Blende 8 angeordnet, um die Einfüllvorrichtung 10 vollständig in die Blende 8 integrieren zu können. Die Einfüllvorrichtung 10 ist innerhalb einer Blendenaussparung 9 der Blende 8 angeordnet. Zwischen der Blendenaussparung 9 und dem Verschlusselement 12 der Einfüllvorrichtung 10 befindet sich ein kleiner Luftspalt, so dass das Verschlusselement 12 innerhalb dieser Blendenaussparung 9 leicht bewegbar ist.

Die als Verschlusselement 12 gebildete schwenkbare Klappe weist eine Außenwand 14 auf, die in der gezeigten ersten Öffnungsstellung gegenüber der Blende um etwa 40° in Richtung eines Benutzers, also entgegen der Bautiefenrichtung geschwenkt ist. Die Klappe weist einen Aufnahmeraum 16 auf, an dessen Unterseite ein Anschlussteil 20 vorgesehen ist, auf das eine Rohrleitung 22 aufgeschoben ist. Mithilfe der Rohrleitung 22 ist die Einfüllvorrichtung 10 fluidisch mit dem Wassertank verbunden.

Fig. 3 zeigt eine schematische Schnittdarstellung der Einfüllvorrichtung 10 von Fig. 2 entlang der Linie III-III. Wie aus Fig. 3 ersichtlich ist, ist die als Verschlusselement 12 gebildete Klappe soweit in der ersten Öffnungsstellung geschwenkt, dass eingefülltes Wasser rückstandsfrei über das Anschlussteil 20 in die Rohrleitung 22 fließen kann.

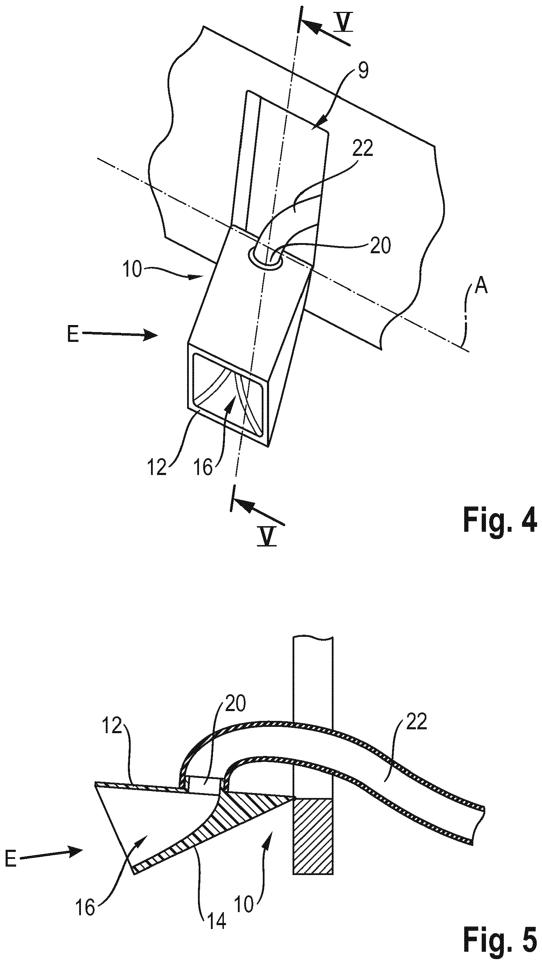

Fig. 4 zeigt eine perspektivische Ansicht, die die Einfüllvorrichtung 10 von Fig. 1 gemäß dem Ausführungsbeispiel der vorliegenden Erfindung schematisch in der zweiten Öffnungsstellung E darstellt. Im Unterschied zu der in Fig. 2 dargestellten ersten Öffnungsstellung B kann in der dargestellten zweiten Öffnungsstellung E Wasser aus dem Wassertank zur Außenseite des Gargeräts entleert werden.

Fig. 5 zeigt eine schematische Schnittdarstellung der Einfüllvorrichtung 10 von Fig. 4 entlang der Linie V-V. Wie aus Fig. 5 ersichtlich ist, kann in der zweiten Öffnungsstellung das Wasser vollständig über die Klappe in einen Behälter (nicht gezeigt) abgeführt werden. Im vorliegenden Fall ist die Außenwand 14 der Klappe gegenüber der Blende um etwa 120° geschwenkt.

### BEZUGSZEICHENLISTE

- 2: Muffel
- 4: Garraum
- 5: Tür
- 6: Bedienknebel
- 7: Griff Tür
- 8: Blende
- 8: Blendaussparung
- 10: Einfüllvorrichtung
- 12: Verschlusselement
- 14: Außenwand
- 16: Aufnahmeraum
- 20: Anschlussteil
- 22: Rohrleitung
- A: Schwenkachse
- S: Schließstellung
- B: erste Öffnungsstellung Befüllen
- E: zweite Öffnungsstellung Entleeren

## Patentansprüche

1. Gargerät, insbesondere Dampfgargerät, mit einem durch eine Tür (5) verschließbaren Garraum (4), einer Bedienblende (8) und einem außerhalb des Garraums (4) angeordneten Wassertank, der mit einer in der Blende (8) angeordneten Einfüllvorrichtung (10) fluidisch gekoppelt ist, wobei die Einfüllvorrichtung (10) ein Verschlusselement (12) aufweist, das in eine erste Öffnungsstellung (B) zum Einfüllen von Wasser und eine zweite Öffnungsstellung (E) zum Entleeren von Wasser aus dem Wassertank bringbar ist, wobei zum Entleeren des Wassertanks eine Pumpe vorgesehen ist, wobei die Pumpe nur in der zweiten Öffnungsstellung (E), die von der ersten Öffnungsstellung (B) verschieden ist, einschaltbar ist, **dadurch gekennzeichnet dass** das Verschlusselement (12) durch eine schwenkbare Klappe gebildet ist.

2. Gargerät nach Anspruch 1, **dadurch gekennzeichnet, dass** das Verschlusselement eine als Frontteil gebildete Außenwand (14) aufweist, die in einer Schließstellung im Wesentlichen flächenbündig mit der Blende (8) ist.

3. Gargerät nach Anspruch 1 oder 2, **dadurch gekennzeichnet, dass** das Verschlusselement (12) durch eine Push-Pull-Funktion aus seiner Schließstellung (S) in eine der Öffnungsstellungen (B, E) bringbar ist.

4. Gargerät nach einem der vorhergehenden Ansprüche, **dadurch gekennzeichnet, dass** das Verschlusselement (12) einen Aufnahmeraum (16) aufweist, an dessen Unterseite ein Anschlussteil (20) zur Verbindung mit dem Wassertank angeordnet ist.

5. Gargerät nach einem der vorhergehenden Ansprüche, **dadurch gekennzeichnet, dass** die Pumpe bei Erreichen der zweiten Öffnungsstellung (E) automatisch eingeschaltet ist.

6. Gargerät nach Anspruch 5, **dadurch gekennzeichnet, dass** die schwenkbare Klappe um eine horizontale Schwenkachse (A) schwenkbar ist.

7. Gargerät nach Anspruch 5 oder 6, **dadurch gekennzeichnet, dass** die als Frontteil gebildete Außenwand (14) in Bezug auf eine durch die Blende (8) gebildete Ebene in der ersten Öffnungsstellung (B) in einem Bereich von 30° bis 60°, insbesondere 40° bis 50° geneigt ist und in der zweiten Öffnungsstellung (E) in einem Bereich von 100° bis 130°, insbesondere 110° bis 120° geneigt ist.

## Claims

1. Cooking appliance, in particular steam cooking appliance, with a cooking compartment (4) which is able to be closed by a door (5), an operating panel (8) and a water tank arranged outside the cooking compartment (4), which has a fluid coupling with a filling apparatus (10) arranged in the panel (8), wherein the filling apparatus (10) has a closure element (12), which is able to be brought into a first open position (B) for filling with water and a second open position (E) for emptying water out from the water tank, wherein in order to empty the water tank a pump is provided, wherein the pump is only able to be switched on in the second open position (E), which is different from the first open position (B), **characterised in that** the closure element (12) is formed by a pivotable flap.

2. Cooking appliance according to claim 1, **characterised in that** the closure element has an outer wall (14) formed as a front part, which in a closed position is substantially flush with the panel (8).

3. Cooking appliance according to claim 1 or 2, **characterised in that** the closure element (12) is able to be brought out from its closed position (S) into one of the open positions (B, E) by a push-pull function.

4. Cooking appliance according to one of the preceding claims, **characterised in that** the closure element (12) has a receiving compartment (16), on the underside of which a connector part (20) is arranged for connecting to the water tank.

5. Cooking appliance according to one of the preceding claims, **characterised in that** the pump is automatically switched on when the second open position (E) is reached.

6. Cooking appliance according to claim 5, **characterised in that** the pivotable flap is able to be pivoted about a horizontal pivot axis (A).

7. Cooking appliance according to claim 5 or 6, **characterised in that** in relation to a plane formed by the panel (8) the outer wall (14) formed as a front part is inclined in a range of from 30° to 60°, in particular 40° to 50°, in the first open position (B) and is inclined in a range of from 100° to 130°, in particular 110° to 120°, in the second open position (E).

## Revendications

1. Appareil de cuisson, en particulier appareil de cuisson à la vapeur, avec un espace de cuisson (4) pouvant être fermé par une porte (5), un tableau de commande (8) et un réservoir d'eau situé à l'extérieur de l'espace de cuisson (4), couplé fluidiquement à un dispositif de remplissage (10) agencé dans le tableau (8), le dispositif de remplissage (10) possédant un élément de fermeture (12) qui, dans une première position d'ouverture (B) peut servir au remplissage avec de l'eau et dans une deuxième position d'ouverture (E) peut servir à la vidange de l'eau hors du réservoir d'eau, une pompe étant prévue pour vidanger le réservoir d'eau, cette pompe ne pouvant être enclenchée que dans la deuxième position d'ouverture (E), différente de la première position d'ouverture (B), **caractérisé en ce que** l'élément de fermeture (12) est formé d'un clapet pivotant.

2. Appareil de cuisson selon la revendication 1, **caractérisé en ce que** l'élément de fermeture présente une paroi extérieure (14) formée en partie frontale, laquelle en position fermée, affleure essentiellement avec le tableau (8).

3. Appareil de cuisson selon la revendication 1 ou 2, **caractérisé en ce que** l'élément de fermeture (12) peut être amené par une fonction push-pull de sa position de fermeture (S) dans une des positions d'ouverture (B, E).

4. Appareil de cuisson selon l'une des revendications précédentes, **caractérisé en ce que** l'élément de fermeture (12) présente un espace de logement (16) au côté inférieur duquel se trouve une pièce de raccord (20) pour raccord au réservoir d'eau.

5. Appareil de cuisson selon l'une des revendications précédentes, **caractérisé en ce que** la pompe s'allume automatiquement au moment où la deuxième position d'ouverture (E) est atteinte.

6. Appareil de cuisson selon la revendication 5,
**caractérisé en ce que** le clapet pivotant pivote sur un axe de pivotement horizontal (A).

7. Appareil de cuisson selon la revendication 5 ou 6,
**caractérisé en ce que** la paroi extérieure (14) formée en partie avant est inclinée, par rapport à un niveau formé par le tableau (8) dans la première position d'ouverture (B), entre 30° et 60°, en particulier entre 40° et 50°, et dans la deuxième position d'ouverture (E), est inclinée entre 100° et 130°, en particulier entre 110° et 120°.
